# EUROPÄISCHE PATENTSCHRIFT

(11) **EP 0 668 243 B1**
(45) Veröffentlichungstag und Bekanntmachung des Hinweises auf die Patenterteilung: **19.09.2001**
(21) Anmeldenummer: 95100751.7
(22) Anmeldetag: 20.01.1995
(51) Int. Cl.: C02F 1/32, C02F 1/18, C02F 1/28, C02F 9/00

(54) **Maschine zur Trinkwasseraufbereitung**
Apparatus for the conditioning of drinking water
Dispositif pour le traitement des eaux potables

(30) Priorität: 21.01.1994 DE 4401691
(43) Veröffentlichungstag der Anmeldung: 23.08.1995
(73) Patentinhaber: AWECO APPLIANCE SYSTEMS GmbH & Co. KG, 88099 Neukirch (DE)
(72) Erfinder: Zucholl, Dr. Klaus, D-68199 Mannheim (DE)
(74) Vertreter: Patentanwälte Eisele, Otten, Roth & Dobler

(56) Entgegenhaltungen:
- EP-A- 0 096 377
- DE-A- 3 414 870
- DE-A- 3 840 276
- GB-A- 2 238 532

## Beschreibung

Die Erfindung betrifft eine Maschine zur dezentralen Trinkwasseraufbereitung mittels Ionenaustauschs, Adsorption an Oberflächen und UV-Bestrahlung. Die prinzipiellen Verfahren zur Trinkwasseraufbereitung mittels Ionenaustauschs, z. B. die Enthärtung oder Entcarbonisierung von Trinkwasser, die Entfernung von Nitrationen mittels nitratselektiver Austauscherharze oder die Adsorption von organischen Verunreinigungen an Aktivkohlen oder Molekularsieben sind hinreichend bekannt und werden in zahlreichen Verfahren und Geräten eingesetzt. Für die Trinkwasseraufbereitung im Haushaltsbereich werden nach diesen Verfahren arbeitende Geräte von verschiedenen Firmen angeboten. Bekannt sind z. B. die Wasserfilterkannen der Firma BRITA zur Wasserenthärtung (im folgenden Auftischgeräte genannt) oder die direkt an die Wasserleitung anzuschließenden Wasserfiltersysteme der Firma BIOLIT zur Nitratentfernung (im folgenden Zapfstellengeräte genannt).

Wesentlicher Bestandteil dieser Geräte sind mit Ionenaustauschern und Aktivkohle gefüllte Filterkartuschen. Die Filterkartuschen haben nur eine begrenzte Kapazität und müssen daher regelmäßig ausgetauscht oder regeneriert werden.

Die bekannten Verfahren und Geräte haben jedoch mehrere prinzipielle Schwachstellen, die durch die hier beschriebenen Verfahren und deren Ausgestaltungen entscheidend verbessert werden. Problematisch ist bei den bekannten Geräten zum einen die Gefahr einer Verkeimung des Trinkwassers, zum anderen ist die Kontrolle der Erschöpfung der benutzten Filterpatrone nur unzureichend gelöst. Weiterhin wird bei diesen Geräten die theoretisch mögliche Filterkapazität der eingesetzten Filtermaterialien aufgrund der einfachen Verfahrensführung nur unzureichend genutzt. Die Wasserqualität des aufbereiteten Wassers ändert sich zudem sehr stark mit der Betriebszeit der in den Geräten eingesetzten Filtermaterialien. Weiterhin benötigen die bekannten Auftischgeräte getrennte Vorratstanks für das unbehandelte und behandelte Wasser.

Der Erfindung liegt die Aufgabe zugrunde, Verfahren und Geräte zur Wasseraufbereitung vorzuschlagen, die die oben genannten Nachteile vermeiden. Zur Lösung dieser Aufgabe wird die im Patentanspruch 1 angegebene Merkmalskombination vorgeschlagen. Weitere vorteilhafte Ausgestaltungen und Weiterbildungen des Erfindungsgedankens ergeben sich aus den abhängigen Ansprüchen.

Zur Entkeimung und Vermeidung der Wiederverkeimung des Trinkwassers wird bei den erfindungsgemäßen Verfahren und Geräten eine vorteilhafte Ausgestaltung der in der Trinkwasseraufbereitung bekannten und bewährten UV-Bestrahlung des Trinkwassers angewandt. Erfindungsgemäß kann durch eine mehrfache UV-Bestrahlung, die mit nur einer UV-Lampe realisiert wird, das Rohwasser vor dem Eintritt in die Filterkartusche entkeimt und damit eine Verkeimung der Filterkartusche weitgehend vermieden werden. Wenn im Falle sehr hoher Keimzahlen im Wasser einige Keime nicht sofort abgetötet werden und die Filterkartusche erreichen und passieren, werden diese Keime in einer zweiten Bestrahlung in der Vorratskanne oder in einem zweiten Bestrahlungsreaktor vor der Wasserentnahmestelle der Wasseraufbereitungsmaschine abgetötet. Eine weitere Entkeimung kann auch durch mehrfache Umwälzung des Wassers innerhalb der Aufbereitungsmaschine erreicht werden. Die zur Sicherheit einer ausreichenden Entkeimung notwendigen UV-Dosisleistungen können mittels eines UV-Sensors gemessen und Alterungserscheinungen der UV-Lampe über verlängerte Bestrahlungszeiten oder langsamere Durchflußgeschwindigkeiten des Wassers weitgehend kompensiert und damit die Nutzungsdauer der UV-Lampe deutlich erhöht werden. Eine bedarfsgerechte, diskontinuierliche Betriebsweise der UV-Lampe erhöht deren Lebensdauer ebenfalls und führt zu einem geringeren Energieverbrauch als bei der meist üblichen, dauernden Betriebsweise. Eine Überwachung, Regelung und Steuerung der Trinkwasseraufbereitung mittels Sensoren und Microcontrollern gewährleistet eine gute und weitgehend gleichbleibende Qualität des behandelten Wassers bei gleichzeitiger guter Ausnutzung der zur Wasseraufbereitung notwendigen Filtermaterialien.

Vorteilhaft ist weiterhin das durch eine spezielle Kreislaufführung des Wassers erreichbare kleine Bauvolumen sowie die kurzfristige Bereitstellung von relativ großen Wassermengen, auch und insbesondere bei relativ kleinen Mengen an Filtermaterialien. Weiterhin vorteilhaft ist bei einer speziellen Ausgestaltung des Verfahrens die Möglichkeit, die Rohwasserqualität und auch deren Änderung zu berücksichtigen sowie die Qualität des Ausgangswassers definiert zu beeinflussen.

Bekanntermaßen ist zum Beispiel die Filterkapazität eines Entcarbonisierungsfilters (vergleichbare Zusammenhänge gelten auch für andere Arten von Ionenaustauschern, Aktivkohlen oder Molekularsieben) und die Qualität des damit behandelten Wassers abhängig von der Durchflußgeschwindigkeit des Wassers (Bettvolumen pro Zeiteinheit, "Bettbelastung") und der chemischen Zusammensetzung des Wassers, in diesem Fall insbesondere von dessen Carbonathärte. Je höher die Durchlaufgeschwindigkeit des Wassers durch das Filter ist, desto schlechter ist die Qualität des aufbereiteten Wassers. Außerdem erfolgt der sogenannte "Durchbruch" der zu entfernenden Spezies durch das Filter bei hoher Durchflußgeschwindigkeit früher. Mit zunehmender Beladung des Filters macht sich dieser Effekt immer stärker bemerkbar bis schließlich die Qualität des aufzubereitenden Wassers nicht mehr den Zielvorgaben entspricht und das Filter ausgetauscht werden muß. Die Totale Filterkapazität des Harzes wird hierbei nur schlecht ausgenutzt. Bei kleinen Durchlaufgeschwindigkeiten des Wassers wird die sogenannte "Durchbruchskurve" der Filterkartusche steiler, was hier gleichbedeutend mit einer besseren Ausnutzung der Filterkapazität ist. Der gleiche Effekt wirkt sinngemäß auch bei verschiedenen Konzentrationen der aus dem Wasser zu entfernenden Spezies. Bei höheren Konzentrationen sollte eine kleinere Durchlaufgeschwindigkeit des Wassers als bei niedrigen Konzentrationen eingestellt werden. Vorteilhaft ist es, zur guten Ausnutzung der Filterkapazität, die Bettbelastung des Filters möglichst gering zu halten. Dies kann durch den Einsatz sehr großer Mengen an Filtermaterialien und/oder durch sehr kleine Wasserdurchflußgeschwindigkeiten erfolgen. In der Praxis stößt beides, insbesondere bei Anwendung in einem hier beschriebenen Zapfstellengerät oder Auftischgerät an Grenzen. Die Größe der Filterkartuschen ist zum Beispiel durch den im Gerät verfügbaren Platz beschränkt,; durch die bei sehr großen Filtermaterialmengen erreichbaren langen Einsatzzeiten der Filterkartusche erhöht sich die Gefahr der Verkeimung der Kartusche; weiterhin ist bei sehr großen Kartuschen und kleinen Strömungsgeschwindigkeiten eine gleichmäßige Strömungsführung in der Kartusche schwierig zu erreichen. Andererseits ist eine Bereitstellung von aufbereitetem Wasser in akzeptablen Zeiten mit großen Filterkartuschen leichter zu erreichen.

Die bekannten Wasserfiltersysteme berücksichtigen diese Faktoren bei der Verfahrensführung nicht oder nicht ausreichend und erzeugen dadurch eine schlechte Qualität des Wassers, bieten eine schlechte Kapazitätsausnutzung der Filtermaterialien, erfordern lange Aufbereitungszeiten und es besteht die Gefahr einer Verkeimung. Eine Steuerung und Regelung anhand verfahrenstechnisch wichtiger Parameter erfolgt nicht. Die Veränderungen der Filtereigenschaften während der Betriebszeit werden nicht berücksichtigt. Veränderungen der Qualität des aufzubereitenden Wassers werden ebenfalls nicht erfaßt. Eine Einstellmöglichkeit kann zum Beispiel bei einem Entcarbonisierungsfilter sinnvoll sein. Aus gesundheitlichen Gründen ist eine fast völlige Entfernung von Calcium- und Magnesiumionen aus dem Wasser meist nicht erwünscht. Dies kann jedoch insbesondere bei solchen Wässern geschehen, bei denen der gesamte oder der überwiegende Teil der Wasserhärte als Carbonathärte vorliegt.

Die erfindungsgemäße Ausgestaltung des Wasseraufbereitungsmaschine vermeidet die genannten Nachteile. Sie berücksichtigt bei der Steuerung und Regelung die Qualität des zu behandelnden Wassers, die Art und den Erschöpfungsgrad der eingesetzten Filterkartusche und die gewünschte Produktwasserqualität. Gleichzeitig wird durch eine vorteilhafte Ausgestaltung einer UV-Bestrahlung das Wasser entkeimt und eine Wiederverkeimung des Produktwassers vermieden. Je nach Anforderungen werden die zur Regelung und Steuerung notwendigen Parameter entweder durch den Benutzer eingegeben oder durch Sensoren gemessen. Folgende Parameter sind in diesem Zusammenhang besonders von Interesse: Die chemische Zusammensetzung des Rohwassers, insbesondere die Carbonathärte, die Gesamthärte, der Nitratgehalt, der Sulfatgehalt, der Chloridgehalt die elektrische Leitfähigkeit und der pH-Wert. Physikalische Größen wie die Umwälzgeschwindigkeit, die seit dem Einsatz der Filterkartusche bekannte Wassermenge, die Art und Größe der eingesetzten Filterkartusche, die Betriebszeit der Filterkartusche seit der letzten Wasserentnahme oder der Wasserstand im Vorratsbehälter. Einer oder mehrere der vorgenannten Parameter können bei der Steuerung und Regelung des Verfahrens berücksichtigt werden. Erfindungsgemäß kann bei dem Verfahren zum Beispiel die Durchlaufgeschwindigkeit des Wassers mit zunehmender Konzentration der zu entfernenden Spezies, mit zunehmender Konzentration von das Verfahren beeinflussenden Störionen (z. B. Sulfatgehalt bei der Entfernung von Nitrationen mittels nitratselektiver Harze; die Kapazität der meisten nitratselektiven Harze nimmt mit zunehmendem Sulfatgehalt des Wassers ab) und mit zunehmendem Beladungsgrad der Filterkartusche verringert werden. Gegebenenfalls kann das aufzubereitende Wasser auch mehrmals nacheinander in der Filterkartusche behandelt werden. Wenn das aufbereitete Wasser zu lange im Vorratsbehälter steht beziehungsweise die Filterkartusche unzureichend durchspült wird, kann es unter ungünstigen Umständen zu Verkeimungen kommen. Solche Betriebszustände können durch eine automatische, zeitabhängige Umwälzung und UV-Bestrahlung vermieden werden.

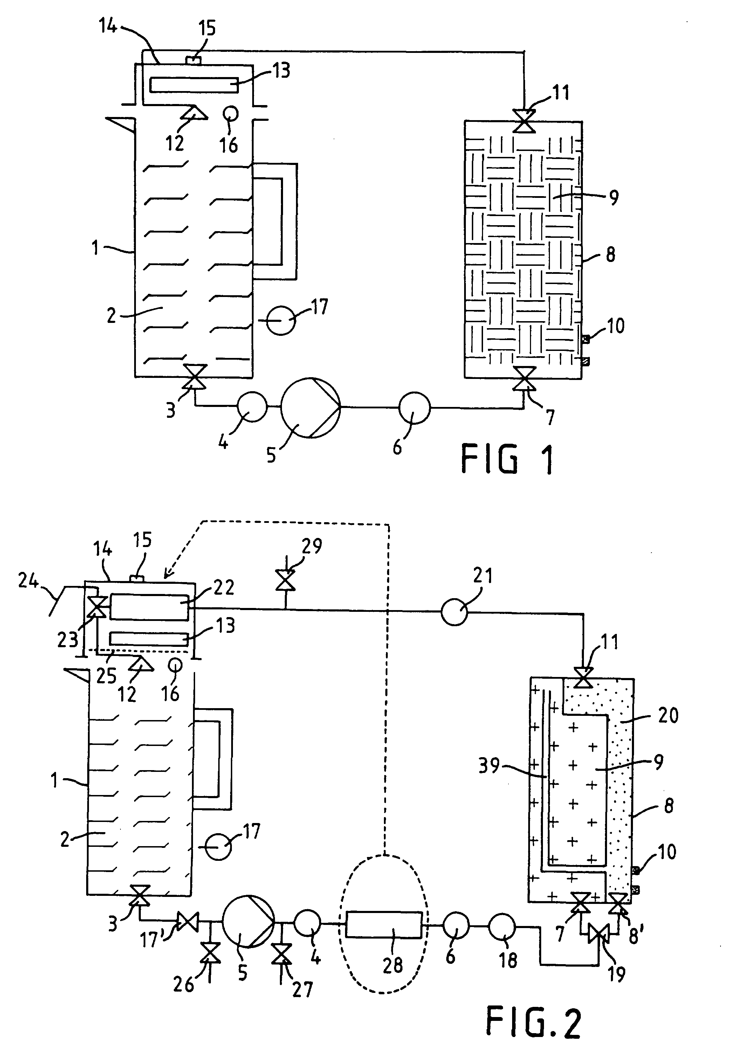

Durch eine Verschneidung mit nur teilweise gefiltertem Wasser läßt sich erfindungsgemäß weiterhin eine bestimmbare Resthärte des aufbereiteten Wassers erhalten. Die Verschneidung kann durch den Einsatz einer aus mehreren getrennten Filterstufen bestehenden Filterkartusche erfolgen, bei der die Wahl der Verfahrenswege durch die Kartusche automatisch durch das Gerät oder manuell durch den Benutzer erfolgt. Ein Beispiel dafür ist in Fig. 2 angegeben. Eine weitere erfindungsgemäße Möglichkeit der Erhaltung der Resthärte macht sich die Tatsache zunutze, daß die verschiedenen chemischen Reaktionen bei der Wasseraufbereitung verschieden schnell ablaufen können. Chemische Umsetzungen an Ionenaustauschern zur Entcarbonisierung laufen normalerweise langsamer ab als chemische Umsetzungen an nitratselektiven Ionenaustauschern oder Aktivkohlen. Bei richtiger Wahl der Bettbelastung während der Wasseraufbereitung kann in einer mit den drei vorgenannten Materialien gefüllten Filterkartusche nach dem Durchlauf des Wassers eine bestimmte Resthärte erhalten werden, währenddessen die anderen nicht erwünschten Wasserinhaltsstoffe entfernt werden. Da sich der optimale Wert der Bettbelastung für eine gleichbleibende Resthärte mit zunehmender Erschöpfung des Ionenaustauschers verringert, ist eine Steuerung oder Regelung des Vorgangs sinnvoll.

Die Steuerung und Regelung des Verfahrens bietet eine gute Ausnutzung der Filterkapazität der Kartuschen bei gleichzeitig guter und weitgehend gleichbleibender Qualität des aufbereiteten Wassers. Die dafür notwendige Technik, wie zum Beispiel der Einsatz programmierbarer Microcontroller ist bekannt und braucht hier nicht weiter beschrieben zu werden.

Vorteilhaft ist weiterhin, daß verschieden große, dem Wasserbedarf angepaßte Filterkartuschen eingesetzt werden können und die Filterkapazitäten, insbesondere auch bei kleinen Kartuschen, optimal genutzt werden. Weiterhin besonders vorteilhaft ist, daß durch das in den Ausführungsbeispielen beschriebene Umwälzverfahren, bei dem der Wasserbehälter für das aufzubereitende Wasser mit dem Wasserbehälter für das aufbereitete Wasser identisch sein kann, eine kleine Bauform des Geräts erreicht werden kann. Das aufbereitete Wasser wird hierbei dergestalt in die Wasserkanne zurückgeführt, daß es dem noch aufzubereitenden Wasser möglichst vermischungsfrei überschichtet wird. Durch den Einsatz des Wasserbehälters als Pufferspeicher können große Wassermengen vorgehalten werden, während die eigentliche Aufbereitungszeit des Wassers verfahrenstechnisch günstig gewählt werden kann. Die Zeit für die Wasseraufbereitung bleibt dabei in für den Benutzer akzeptablen Grenzen.

Die Erfindung wird im folgenden anhand von Ausführungsbeispielen näher erläutert, aus denen sich weitere wichtige Merkmale ergeben.
- Fig. 1: zeigt schematisch den Aufbau einer ersten Ausführungsform des erfindungsgemäßen Verfahrens,
- Fig. 2: zeigt eine weitere Ausgestaltung des erfindungsgemäßen Verfahrens und
- Fig. 3: zeigt eine dritte Ausgestaltung des erfindungsgemäßen Verfahrens.

Nach Fig. 1 wird eine abnehmbare Wasserkanne 1 mit dem aufzubereitenden Wasser 2 gefüllt und in die Wasseraufbereitungsmaschine gestellt. Dabei verhindert die Rückschlagventilkombination 3, daß das Wasser beim Füllen der Kanne auslaufen oder daß Wasser aus dem Gerät austreten kann. Beim Aufsetzen der Kanne wird der Durchlaß der Rückschlagventilkombination geöffnet. Der Drucksensor 4 bestimmt anhand des hydraulischen Drucks der Wassersäule in der Kanne den Füllstand bzw. die aufzubereitende Wassermenge. Alternativ kann der Füllstand auch durch einen Füllstandssensor 16 gemessen werden. Hierfür geeignete Sensoren, zum Beispiel Ultraschallentfernungsmesser sind Stand der Technik. Die Wasseraufbereitung wird durch manuelles Drücken einer Starttaste durch die Steuer- und Regelelektronik (nicht eingezeichnet) eingeleitet. Alternativ kann ein Wechsel der Wasserkanne 1 durch einen Sensor 17 vom Gerät erkannt werden und die Wasseraufbereitung automatisch eingeleitet werden. Die Elektronik des Geräts aktiviert daraufhin die UV-Lampe 13, die das in der Kanne befindliche Wasser 2 durch Bestrahlung entkeimt, anschließend die Pumpe 5, die das Wasser kontinuierlich oder schubweise durch einen elektrischen Wasserzähler 6, weiter durch eine Rückschlagventilkombination 7, durch eine Filterkartusche 8 und weiter über die Rückschlagventilkombination 11 bis zum Rückflußverteiler 12 fördert. Der Rückflußverteiler 12 ist dabei derart gestaltet, daß das in die Kanne zurückfließende Wasser dem in der Kanne befindlichen Wasser möglichst ohne Vermischung überschichtet wird. Die Rückschlagventilkombinationen 7 und 11 haben die Aufgabe, bei einem Wechsel der Filterkartusche 8 ein Auslaufen von Wasser aus der Kartusche oder dem Gerät zu verhindern. Sie sind nach Einsetzen der Filterkartusche durchgängig. Alternativ kann die Filterkartusche auch in Flaschenform mit einem einseitigen oben befindlichen Anschluß ausgeführt sein. Der zweite Anschluß der Kartusche wird dabei innerhalb oder außerhalb derselben nach oben geführt. Dadurch kann auch ohne Verschlußventil kein Wasser beim Filterwechsel aus dieser auslaufen. Die Filterkartusche 8 beinhaltet eine oder mehrere Kammern, gefüllt mit den eigentlichen Wasseraufbereitungsmaterialien 9. Zur Wasseraufbereitung werden hier, je nach Anwendungszweck verschiedene, bekannte Materialien eingesetzt. Zur Entcabonisierung des Wassers werden z. B. schwach saure Kationenaustauscher der Wasserstofform, zur Nitratentfernung nitratselektive Anionenaustauscher, zur Entfernung von Schwermetallen selektive Kationenaustauscher und zur Entfernung von organischen Verunreinigungen, Geruchs- und Geschmackstoffen, Chlor und chlorierten Kohlenwasserstoffen Aktivkohle bzw. gesilberte Aktivkohle, die gleichzeitig das Wachstum von Mikroorganismen bremst, eingesetzt. Weiterhin kann die Filterkartusche Feinfilter zur Entfernung von Partikeln oder Mikroorganismen enthalten. Aufgrund der Verschiedenheit der aufzubereitenden Wässer und der Ansprüche seitens der Benutzer an die gewünschte Wasserqualität ist es sinnvoll, verschiedene Filterkartuschen für die Wasseraufbereitungsmaschine herzustellen. Um die Regelung der Wasseraufbereitungsmaschine zu optimieren, müssen der Regelelektronik die Daten der eingesetzten Filterkartusche, wie z. B. Art und Menge der Füllung, Anzahl der Filterkammern oder Filterkapazitäten bei verschiedenen Bettbelastungen und Störionenkonzentrationen bekannt sein. Dies kann entweder durch manuelle Eingabe des Benutzers, vorzugsweise aber durch maschinenlesbare Markierungen 10, wie zum Beispiel durch Strichcode oder durch mechanische Ausformungen an der Filterkartusche erfolgen. Detaillierte Filterdaten können zweckmäßigerweise bereits in der Steuerelektronik gespeichert sein, die Kodierung auf der Kartusche oder die manuelle Eingabe vereinfacht sich dann erheblich (z. B. nur Kennziffer).

Die zur Steuerung und Regelung notwendigen Daten über die Qualität des Rohwassers und die gewünschte Qualität des behandelten Wassers werden der Elektronik in der hier gezeigten Ausführungsform über geeignete Eingabeinstrumente, z. B. eine Tastatur, durch den Benutzer des Geräts mitgeteilt. Anhand dieser Daten und der durch die Filterkartusche bereits durchgeflossenene Wassermenge wird die Ansteuerung der Pumpe 5 und damit die kontinuierliche oder diskontinuierliche optimale Fördergeschwindigkeit und Fördermenge gewählt. Eine diskontinuierliche Förderung kann den Energieverbrauch der Förderpumpe senken und es ist keine stetige Pumpenregelung notwendig. Die Förderdatenmengen können mittels eines Wasserzählers 6 gemessen oder bei geringeren Anforderungen an die Genauigkeit auch aus den Betriebsdaten der Umwälzpumpe (zum Beispiel Aufnahmeleistung, Drehzahl und Betriebsdauer) errechnet werden. Nach Erschöpfung der Filterpatrone schaltet das Gerät ab. Bereits vorher kann der Benutzer auf einen bald notwendigen Filterwechsel durch eine Geräteanzeige vorbereitet werden.

Das aufbereitete Wasser wird in der Kanne 1 entkeimt und keimfrei gehalten. Hierzu wird das Wasser durch eine UV-Lampe 13, die in einem Reflektorgehäuse 14 sitzt, mit UV-Licht bestrahlt. Das Reflektorgehäuse besteht zumindest innen aus einem Material mit hohem UV-Reflexionsvermögen, insbesondere aus Aluminium. Die Bestrahlung des Wassers kann kontinuierlich erfolgen. Nach erfolgter Entkeimung ist es allerdings im allgemeinen ausreichend, das in der Kanne bevorratete Wasser zur Vermeidung einer Wiederverkeimung in Zeitabständen von einigen Stunden einige Sekunden lang zu bestrahlen. Eine Alterung der Lampe kann durch einen UV-Sensor 15 gemessen werden. Die Elektronik kann die Bestrahlungszeiten daraufhin verlängern und damit die Nutzungsdauer der Lampe deutlich erhöhen. Ein Defekt der UV-Lampe kann dem Benutzer mitgeteilt werden. Über den Sensor 17 wird die UV-Lampe bei Entnahme der Kanne aus dem Gerät aus Sicherheitsgründen abgeschaltet.

Fig. 2 zeigt eine weitere Ausgestaltung des erfindungsgemäßen Verfahrens. Die wesentlichen Unterschiede zur Ausgestaltung der Erfindung nach Fig. 1 bestehen in der automatischen Erfassung und Kontrolle der physikalisch-chemischen Wasserparameter, der Möglichkeit, dem Gerät das Wasser über einen Wasseranschluß oder einen Vorratsbehälter zuzuführen, dem Gerät aufbereitetes Wasser über einen Zapfhahn, auch in definierten Mengen, zu entnehmen sowie in der Einsatzmöglichkeit mehrkammriger Filterkartuschen zur differenzierten Wasseraufbereitung, z. B. Resthärteerhaltung.

Aus der abnehmbaren Wasserkanne 1 wird das aufzubereitende Wasser 2 über die Rückschlagventilkombination 3 mittels der Pumpe 5 gefördert. Das Rückschlagventil 17' verhindert einen Rückfluß von Wasser aus den nachgeschalteten Teilen in die Wasserkanne. Über das Ventil 26 besteht die Möglichkeit, Wasser aus einem Wasserleitungsanschluß über das Steuerventil 27 der Maschine zuzuführen. Der Drucksensor 4 kann in diesem Fall der Regelelektronik eine unzulässig hohen Wasserdruck melden, worauf das Ventil 27 abgeregelt wird. Bei einer Wasserzuführung aus der Wasserkanne oder einem separaten Vorratsbehälter kann der Drucksensor 4 anhand des hydraulischen Drucks der Wassersäule den Füllstand in den Gefäßen bestimmen. Ein Füllstandssensor 16 verhindert bei einer Wasserversorgung der Wassermaschine aus einem Wasserhahn oder Vorratsbehälter ein Überlaufen der Wasserkanne. Das aufzubereitende Wasser durchläuft zur Entkeimung den UV-Durchflußbestrahlungsreaktor 28. Dieser Durchflußbestrahlungsreaktor besteht aus einem UV-durchlässigen Rohr, vorzugsweise aus Quarzglas und befindet sich zusammen mit einem weiteren Durchflußbestrahlungsreaktor 22 im Reflektorgehäuse 14 der Wasserkanne. Das Wasser strömt durch den Wasserzähler 6 und dann durch einen ersten Sensorblock 18. In diesem Sensorblock befinden sich Sensoren, die die hier interessierenden physikalisch-chemisch Wasserparameter erfassen, zum Beispiel Sensoren für die Carbonathärte, die Gesamthärte, den Nitratgehalt, den Sulfatgehalt, den Chloridgehalt, die elektrische Leitfähigkeit und den pH-Wert.

Das Wasser wird weiter über ein Verschneideventil 19, durch die Rückschlagventilkombinationen 7 und 8', durch eine zweikammrige Filterkartusche 8 und weiter über die Rückschlagventilkombination 11 zu einem weiteren Sensorblock 21 gefördert. Die Kammern 9' und 20 der Filterkartusche 8, die durch das Rohr 39 verbunden sind, sind mit verschiedenen Filtermaterialien gefüllt. Die Aufteilung der Wasserströme durch die Filterkartusche erfolgt über das automatisch oder manuell verstellbare Verschneideventil 19. Im Sensorblock 21 befinden sich ebenfalls Sensoren zu Bestimmung physikalisch-chemischer Wasserparameter. Durch den Einsatz zweier Sensorsysteme sind genaue Differenzmessungen und damit eine optimale Verfahrensregelung möglich. Veränderungen der Rohwasserqualität werden automatisch miterfaßt. Die Sensorblöcke 18 und 21 können gegebenenfalls auch Bestandteil der Filterkartusche 8 sein. Besonders vorteilhaft ist diese Lösung dann, wenn die Sensoren nur eine kurze Lebensdauer haben. Dies ist zum Beispiel bei den zur Zeit verfügbaren Calciumsensoren der Fall. Vom Sensorblock 21 strömt das Wasser durch einen zweiten UV-Bestrahlungsreaktor 22, der sich in einem Reflektorgehäuse 14 befindet und wird dort von der UV-Lampe 13 nochmals bestrahlt. Ein UV-Sensor 15 hinter dem Reaktor 22 mißt die UV-Strahlungsstärke und kann damit Alterungserscheinungen der UV-Lampe oder Ablagerungen im UV-Bestrahlungsreaktor 22 erkennen. Eine UV-durchlässige Schutzscheibe 25 schützt vor Verunreinigung, Beschädigung oder Berührung der Bestrahlungskammerteile. Nach der Entkeimung wird das Wasser über ein Umschaltventil 23 entweder wie in Fig. 1 über einen Rückflußverteiler 12 in eine Kanne zurückgeführt. Alternativ kann das Wasser auch über das Umschaltventil 23 einem Zapfhahn 24 zugeführt und dort direkt entnommen werden. Eine Betätigung des Zapfhahns aktiviert automatisch die Wasseraufbereitungsmaschine. Über entsprechende Bedientasten der Elektronik ist auch die Entnahme voreingestellter Wassermengen möglich. Weiterhin ist eine Nachfüllung der Wasserkanne 1 über einen Wasseranschluß 29 möglich. Das Wasser wird dabei im Bestrahlungsreaktor 22 entkeimt.

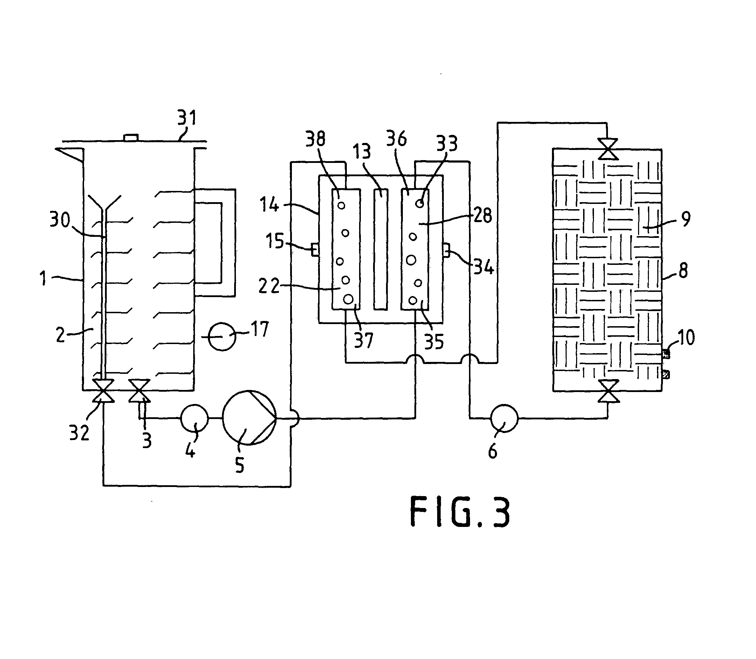

Fig. 3 zeigt eine dritte Ausgestaltung des erfindungsgemäßen Verfahrens. Im Gegensatz zu den Ausführungen nach den Figuren 1 und 2 erfolgt hier keine Entkeimung in der Wasserkanne, vielmehr ist hier eine separate UV-Entkeimungszelle vorgesehen. Bei einer Aufbereitung von keimarmen Wässern und kurzen Wechselintervallen des Wassers und der Filterkartusche ist die nachfolgend beschriebene Ausführung meist ausreichend.

Das Wasser 2 aus der abnehmbaren Wasserkanne 1 wird über die Rückschlagventilkombination 3 und den Drucksensor 4 mittels der Pumpe 5 durch einen ersten Durchflußbestrahlungsreaktor 28 über den Wasserzähler 6 und die Filterkartusche 8 durch einen zweiten Durchflußbestrahlungsreaktor 22 über eine Rückschlagventilkombination 32 und ein Steigrohr mit Diffusor 30 zurück in die Wasserkanne gepumpt. Diese ist mit einem Verschluß 31 gegen Verschmutzung geschützt. Die Kartusche 8 trägt zu ihrer Identifizierung maschinenlesbare Markierungen 10. Während des Umpumpens wird das Wasser durch Bestrahlung mit der UV-Lampe 13 entkeimt. Die UV-Lampe 13 und die zwei Durchflußbestrahlungsreaktoren 22 und 28 sitzen in einem Reflektorgehäuse 14. Hinter den Durchflußbestrahlungsreaktoren sitzt jeweils ein UV-Sensor 15 und 34, mit denen eine Alterung der UV-Lampe oder eine Verschmutzung der Durchflußbestrahlungsreaktoren gemessen werden kann. In den Durchflußbestrahlungsreaktoren befinden sich Reinigungskörper 33, die z. B. vorteilhafterweise aus UV-durchlässigen Glaskugeln bestehen. Diese werden durch die Wasserströmung aufgewirbelt und können eventuelle Ablagerungen an den Rohrwandungen mechanisch entfernen. Dazu ist die UV-Bestrahlungskammer zweckmäßigerweise senkrecht montiert. Weiterhin bewirken die aufgewirbelten Reinigungskörper die Ausbildung turbulenter Strömungen in den Bestrahlungsreaktoren und damit eine gleichmäßigere Bestrahlung des Wassers als bei laminarer Strömungsführung. Die Vermeidung laminarer Strömungen wird weiterhin durch eine spezielle Formgebung der Ein- und Auslaufstrecken 35, 36, 37, 38 erreicht. Bevorzugt werden hier Formen, die dem Wasser ein spiralförmiges oder turbulentes Profil aufprägen. Eine ähnliche Wirkung kann auch durch Einbauten in die Durchflußbestrahlungsreaktoren erreicht werden.

## Patentansprüche

1. Wasseraufbereitungsmaschine, insbesondere zur Trinkwasseraufbereitung in dezentralen Zapfstellengeräten oder Auftischfiltern mit Mitteln zur ein- oder mehrfachen Umwälzung des Wassers innerhalb des Gerätes, mit Mitteln zur kontinuierlichen oder diskontinuierlichen Umwälzung des Wassers sowie mit Mitteln zur Entkeimung und Aufrechterhaltung der Entkeimung des Wassers durch UV-Bestrahlung, **dadurch gekennzeichnet, daß** Mittel zur Einstellung und Regelung der Durchlaufgeschwindigkeit während des Umwälzens des aufzubereitenden Wassers in Abhängigkeit von der Rohwasserqualität und/oder der Art und/oder dem Erschöpfungsgrad der eingesetzten Filterkartusche und der gewünschten Reinwasserqualität vorgesehen sind.

2. Wasseraufbereitungsmaschine nach Anspruch 1 **dadurch gekennzeichnet, daß** ein identischer und/oder abnehmbarer Vorratsbehälter für das aufzubereitende und aufbereitete Wasser vorgesehen ist.

3. Wasseraufbereitungsmaschine nach Anspruch 1 **dadurch gekennzeichnet, daß** Mittel zur Überwachung des Erschöpfungsgrads der eingesetzten Filterkartusche anhand der durchgeflossenen Wassermenge oder mittels Sensoren und Mittel zur manuellen Eingabe von physikalisch-chemischen Wasserparametern oder Mittel zur Messung dieser Parameter mittels geeigneter physikalisch-chemischer Sensoren vor und/oder nach der Filterkartusche sowie Mittel zur Auswertung dieser Parameter für die Verfahrensregelung vorgesehen sind.

4. Wasseraufbereitungsmaschine nach einem der vorgenannten Ansprüche **dadurch gekennzeichnet, daß** Sensoren zur Bestimmung der elektrischen Leitfähigkeit und/oder der Carbonathärte des Wassers, pH-Elektroden und/oder ionensensitive Elektroden für Calcium, Magnesium, Nitrat, Sulfat und/oder Chlorid vorgesehen sind.

5. Wasseraufbereitungsmaschine nach einem der vorgenannten Ansprüche **dadurch gekennzeichnet, daß** eine abnehmbare Vorratskanne und/oder ein oder mehrere von einer UV-Lampe bestrahlte Durchflußreaktoren zur ein- oder mehrfachen Entkeimung und Aufrechterhaltung des entkeimten Zustands vorgesehen ist.

6. Wasseraufbereitungsmaschine nach einem der vorgenannten Ansprüche **dadurch gekennzeichnet, daß** Mittel zur Aktivierung der Bestrahlungslampe und/oder der Förderpumpe bei längeren Stillstandszeiten zur Vermeidung einer Wiederverkeimung des Wassers vorhanden sind.

7. Wasseraufbereitungsmaschine nach einem der vorgenannten Ansprüche **dadurch gekennzeichnet, daß** sowohl ein Zapfhahn als auch Mittel zur direkten Entnahme des aufbereiteten und entkeimten Wassers durch die abnehmbare Kanne vorgesehen sind.

8. Wasseraufbereitungsmaschine nach einem der vorgenannten Ansprüche **dadurch gekennzeichnet, daß** sie mit und ohne direkten Wasseranschluß betreibbar ist.

9. Wasseraufbereitungsmaschine nach einem der vorgenannten Ansprüche **dadurch gekennzeichnet, daß** Mittel zur Entkeimung des vom Wasseranschluß, einem Vorratsbehälter oder der Wasserkanne einströmenden Wassers vor Eintritt in die Filterkartusche und zur nochmaligen Entkeimung des an einem Zapfhahn abgenommenen Wassers oder in die Wasserkanne zurückfließenden Wassers vorhanden sind.

10. Wasseraufbereitungsmaschine nach einem der vorgenannten Ansprüche **dadurch gekennzeichnet, daß** ein Sensor zur Messung des Füllstands der Wasserkanne oder Mittel zur Berechnung des Füllstands aus der Leistungsaufnahme der Förderpumpe vorgesehen sind.

11. Wasseraufbereitungsmaschine nach einem der vorgenannten Ansprüche **dadurch gekennzeichnet, daß** Dosiermittel zur Entnahme definierter Mengen von aufbereitetem Wasser aus dem Gerät vorgesehen sind.

12. Wasseraufbereitungsmaschine nach einem der vorgenannten Ansprüche **dadurch gekennzeichnet, daß** Mittel zur Messung der umgewälzten und gezapften Wassermengen mittels eines Wasserzählers oder zur Ermittlung dieser Wassermengen aus den Betriebsdaten der Pumpe vorhanden sind.

13. Wasseraufbereitungsmaschine nach einem der vorgenannten Ansprüche **dadurch gekennzeichnet, daß** Mittel zur Abschaltung der Filterkartusche bei ihrer Erschöpfung und eine Restkapazitätsanzeige vorgesehen sind.

14. Wasseraufbereitungsmaschine nach einem der vorgenannten Ansprüche **dadurch gekennzeichnet, daß** Mittel zur elektronischen Regelung und Überwachung der Gerätefunktionen vorgesehen sind.

15. Wasseraufbereitungsmaschine nach einem der vorgenannten Ansprüche **dadurch gekennzeichnet, daß** ein Drucksensor zur Drucküberwachung und Verhinderung unzulässig hohen Systemdrucks vorhanden ist.

16. Wasseraufbereitungsmaschine nach einem der vorgenannten Ansprüche **dadurch gekennzeichnet, daß** die zur Überwachung der Filterkartusche eingesetzten Sensoren in die Filterkartuschen integriert sind.

17. Wasseraufbereitungsmaschine nach einem der vorgenannten Ansprüche **dadurch gekennzeichnet, daß** die Filterkartusche aus einer oder mehreren untereinander verbundenen oder unabhängigen Kammern besteht und die Verfahrenswege durch die verschiedenen Kammern der Filterkartusche an der Filterkartusche oder in der Wasseraufbereitungsmaschine manuell oder automatisch einstellbar sind und damit die Qualität des aufbereiteten Wassers beeinflußbar ist.

18. Wasseraufbereitungsmaschine nach einem der vorgenannten Ansprüche **dadurch gekennzeichnet, daß** die Filterkartusche zum Zweck ihrer Identifizierung für das Gerät lesbare Markierungen trägt.

19. Wasseraufbereitungsmaschine nach einem der vorgenannten Ansprüche **dadurch gekennzeichnet, daß** die Filterkartusche rohrförmig oder flaschenförmig ist, beidseitig oben und unten oder einseitig oben anschließbar ist, wobei bei einseitigem Anschluß der oder die unteren Kartuschenanschlüsse innerhalb oder außerhalb der Kartusche nach oben geführt sind.

## Claims

1. Water treatment machine, in particular for drinking water treatment in decentralised dispensers or water filter jugs with means for single or multiple circulation of the water within the apparatus, with means for continuous or discontinuous circulation of the water and with means for sterilising and maintaining the sterilisation of the water by UV irradiation, **characterised in that** means for adjusting and controlling the rate of passage during circulation of the water to be treated are provided as a function of the untreated water quality and/or the type and/or the degree of depletion of the filter cartridge used and the desired pure water quality.

2. Water treatment machine according to claim 1, **characterised in that** an identical and/or removable storage tank is provided for the water to be prepared and prepared water.

3. Water treatment machine according to claim 1, **characterised in that** means for monitoring the degree of depletion of the filter cartridge used with the aid of the quantity of water which has flowed through or by means of sensors and means for manual input of physico-chemical water parameters or means for measuring these parameters by suitable physico-chemical sensors upstream and/or downstream of the filter cartridge and means for evaluating these parameters for the process control are provided.

4. Water treatment machine according to any one of the preceding claims, **characterised in that** sensors for determining the electrical conductivity and/or the carbonate hardness of the water, pH electrodes and/or ion-sensitive electrodes for calcium, magnesium, nitrate, sulphate and/or chloride are provided.

5. Water treatment machine according to any one of the preceding claims, **characterised in that** a removable jug and/or one or more flow reactors irradiated by a UV lamp is/are provided for single or multiple sterilisation and maintenance of the sterilised state.

6. Water treatment machine according to any one of the preceding claims, **characterised in that** means for activating the irradiation lamp and/or the delivery pump during prolonged rest periods are provided to prevent reinfection of the water with germs.

7. Water treatment machine according to any one of the preceding claims, **characterised in that** both a tap and means for direct extraction of the treated and sterilised water through the removable jug are provided.

8. Water treatment machine according to any one of the preceding claims, **characterised in that** it can be operated with and without direct water supply.

9. Water treatment machine according to any one of the preceding claims, **characterised in that** means for sterilising the water flowing in from the water supply, a storage tank or the water jug are provided upstream of entry into the filter cartridge and for further sterilisation of the water taken off at a tap or water flowing back into the water jug.

10. Water treatment machine according to any one of the preceding claims, **characterised in that** a sensor for measuring the fullness of the water jug or means for calculating the fullness from the power consumption of the conveying pump are provided.

11. Water treatment machine according to any one of the preceding claims, **characterised in that** metering means for extracting defined quantities of treated water from the apparatus are provided.

12. Water treatment machine according to any one of the preceding claims, **characterised in that** means for measuring the circulated and dispensed quantities of water by means of a water meter or for determining these quantities of water from the operating data of the pump are provided.

13. Water treatment machine according to any one of the preceding claims, **characterised in that** means for disconnecting the filter cartridge when it is depleted and a remaining capacity display are provided.

14. Water treatment machine according to any one of the preceding claims, **characterised in that** means for electronic control and monitoring of the apparatus functions are provided.

15. Water treatment machine according to any one of the preceding claims, **characterised in that** a pressure sensor for monitoring the pressure and preventing excessively high system pressure is provided.

16. Water treatment machine according to any one of the preceding claims, **characterised in that** the sensors used to monitor the filter cartridge are integrated in the filter cartridges.

17. Water treatment machine according to any one of the preceding claims, **characterised in that** the filter cartridge consists of one or more chambers which are connected to one another or are separate, and the paths through the various chambers of the filter cartridge can be manually or automatically adjusted at the filter cartridge or in the water treatment machine and therefore the quality of the treated water can be influenced.

18. Water treatment machine according to any one of the preceding claims, **characterised in that** the filter cartridge bears legible markings for its identification for the apparatus.

19. Water treatment machine according to any one of the preceding claims, **characterised in that** the filter cartridge is tubular or bottle-shaped, can be connected on both sides, top and bottom or on one side at the top, the lower cartridge connection(s) being guided upwards inside or outside of the cartridge with one-sided connection.

## Revendications

1. Machine de traitement de l'eau, en particulier pour le traitement de l'eau potable dans des filtres à servir ou des appareils de prise d'eau décentralisés, comportant des moyens pour faire circuler une fois ou plusieurs fois l'eau à l'intérieur de l'appareil, des moyens pour faire circuler de façon continue ou de façon discontinue l'eau, ainsi que des moyens pour désinfecter et maintenir la désinfection de l'eau par rayonnement UV, **caractérisée en ce que** des moyens sont prévus pour régler et réguler la vitesse de passage pendant la circulation de l'eau à traiter de façon dépendant de la qualité de l'eau brute et/ou du type et/ou du degré d'épuisement de la cartouche de filtre utilisée et de la qualité souhaitée de l'eau pure.

2. Machine de traitement de l'eau selon la revendication 1, **caractérisée en ce qu'**un réservoir identique et/ou amovible est prévu pour l'eau à traiter et l'eau traitée.

3. Machine de traitement de l'eau selon la revendication 1, **caractérisée en ce que** des moyens sont prévus pour surveiller le degré d'épuisement de la cartouche de filtre utilisée en référence à la quantité d'eau ayant circulé ou par des capteurs et des moyens pour l'entrée manuelle de paramètres physico-chimiques de l'eau ou des moyens pour mesurer ces paramètres par des capteurs physico-chimiques appropriés avant et/ou après la cartouche de filtre, ainsi que des moyens pour exploiter ces paramètres pour la régulation du procédé.

4. Machine de traitement de l'eau selon une des revendications précitées,
**caractérisée en ce que** des capteurs pour déterminer la conductibilité électrique et/ou la dureté au carbonate de l'eau, des électrodes pH et/ou des électrodes sensibles aux ions pour le calcium, le magnésium, le nitrate, le sulfate et/ou le chlorure, sont prévus.

5. Machine de traitement de l'eau selon une des revendications précitées,
**caractérisée en ce qu'**un réservoir amovible et/ou un ou plusieurs réacteurs de circulation subissant le rayonnement d'une lampe UV pour désinfecter une ou plusieurs fois et maintenir l'état désinfecté sont prévus.

6. Machine de traitement de l'eau selon une des revendications précitées,
**caractérisée en ce que** des moyens pour activer la lampe de rayonnement et/ou la pompe d'alimentation sont prévus, pour de longs temps d'arrêt, pour éviter une réinfection de l'eau.

7. Machine de traitement de l'eau selon une des revendications précitées,
**caractérisée en ce qu'**aussi bien un robinet de puisage qu'également des moyens pour l'évacuation directe de l'eau traitée et désinfectée à travers le réservoir amovible sont prévus.

8. Machine de traitement de l'eau selon une des revendications précitées,
**caractérisée en ce qu'**elle peut fonctionner avec et sans un raccord direct d'eau.

9. Machine de traitement de l'eau selon une des revendications précitées,
**caractérisée en ce que** des moyens pour la désinfection de l'eau entrant par le raccord d'eau, un réservoir ou le pot à eau sont prévus avant l'entrée dans la cartouche de filtre et pour une fois encore désinfecter l'eau prélevée d'un robinet de prise ou l'eau recirculant dans le pot à eau.

10. Machine de traitement de l'eau selon une des revendications précitées,
**caractérisée en ce qu'**un capteur pour mesurer l'état de remplissage du pot à eau ou des moyens pour calculer l'état de remplissage à partir de la puissance absorbée de la pompe d'alimentation sont prévus.

11. Machine de traitement de l'eau selon une des revendications précitées,
**caractérisée en ce que** des moyens de dosage pour évacuer des quantités définies d'eau traitée de l'appareil sont prévus.

12. Machine de traitement de l'eau selon une des revendications précitées,
**caractérisée en ce que** des moyens pour mesurer les quantités d'eau ayant circulé et ayant été puisées au moyen d'un compteur d'eau ou pour déterminer ces quantités d'eau à partir des données de fonctionnement de la pompe sont prévus.

13. Machine de traitement de l'eau selon une des revendications précitées,
**caractérisée en ce que** des moyens pour mettre hors circuit la cartouche de filtre lors de son épuisement et un affichage de capacité résiduelle sont prévus.

14. Machine de traitement de l'eau selon une des revendications précitées,
**caractérisée en ce que** des moyens pour la surveillance et le réglage électroniques des fonctions de l'appareil sont prévus.

15. Machine de traitement de l'eau selon une des revendications précitées,
**caractérisée en ce qu'**un capteur de pression pour surveiller la pression et empêcher une pression trop élevée du système est prévu.

16. Machine de traitement de l'eau selon une des revendications précitées,
**caractérisée en ce que** les capteurs utilisés pour surveiller la cartouche de filtre sont intégrés dans les cartouches de filtre.

17. Machine de traitement de l'eau selon une des revendications précitées,
**caractérisée en ce que** la cartouche de filtre est constituée d'une ou plusieurs chambres indépendantes ou reliées ensemble, et les trajets de déplacement à travers les différentes chambres de la cartouche de filtre peuvent être réglés au niveau de la cartouche de filtre ou dans la machine de traitement de l'eau de façon manuelle ou automatique et, ainsi, la qualité de l'eau traitée peut être influencée.

18. Machine de traitement de l'eau selon une des revendications précitées,
**caractérisée en ce que** la cartouche de filtre porte des repères lisibles par l'appareil dans le but de son identification.

19. Machine de traitement de l'eau selon une des revendications précitées,
**caractérisée en ce que** la cartouche de filtre est de forme tubulaire ou cylindrique, peut être raccordée de façon bilatérale en haut et en bas ou de façon unilatérale en haut, le ou les raccords de cartouche inférieurs, dans le cas d'un raccord unilatéral, étant guidés vers le haut à l'intérieur ou à l'extérieur de la cartouche.
